# EUROPEAN PATENT APPLICATION

(11) **EP 4 109 815 A1**
(43) Date of publication of application: **28.12.2022**
(21) Application number: 21213312.8
(22) Date of filing: 09.12.2021
(51) Int. Cl.: H04L 9/40

(54) **ONE-TIME PASSWORD SYSTEM**

(30) Priority: 21.06.2021 JP 2021102725
(71) Applicant: LaLoka Labs LLC, Taito-ku Tokyo (JP)
(72) Inventor: ABDULLAH, Iqbal Bin, Tokyo (JP)
(74) Representative: Mewburn Ellis LLP

(57) **Abstract**

[Subject] To provide a one-time password system with which the customer can focus on the main business logic and to concentrate on its own original system.

[Means of Solution] The one-time password system for issuing and authenticating a one-time password comprises a first server managed by a manager, with an application available via the Web, a second server managed by the manager for issuing and authenticating the one-time password via the Web, a database managed by the manager for storing the one-time password issued by the second server, a customer terminal managed by a customer, and an end user terminal managed by an end user who is a user of the customer, wherein the customer terminal performs authentication of the one-time password using the first server, the second server and the database when a one-time password authentication processing procedure is started in a service requesting procedure.

## Description

### [Technical Field]

The present invention relates to a one-time password system, and particularly to a one-time password system for issuing and authenticating a one-time password.

### [Background Art]

A one-time password is a disposable password. While it was conventionally general to perform authentication using an ID and password when using a service on the Web, it is possible to enhance security performing authentication using a one-time password in addition to authentication of the ID and password.

Various techniques have been suggested as a technique related to such one-time passwords (see, for instance, Patent Literatures 1, 2).

However, there is a problem that when contents related to one-time passwords are incorporated in a customer's original service flow logic, the customer will have to focus also on the contents related to the one-time passwords, making it difficult to focus on its main business logic and to concentrate on its own original system.

### [Citation List]

### [Patent Literature]

[Patent Literature 1] Japanese Patent Laid-Open Publication No. 2004-070463
[Patent Literature 2] Japanese Patent Laid-Open Publication No. 2007-264835

### [Summary of the Invention]

### [Subject the Invention is to Solve]

Therefore, the subject of the present invention is to provide a one-time password system that enables the customer to focus on its main business logic and to concentrate on its own original system.

### [Means for Solving the Subject]

For achieving the above subject, the invention as claimed in Claim 1 is a one-time password system for issuing and authenticating a one-time password, comprising a first server managed by a manager, with an application available via the Web, a second server managed by the manager for issuing and authenticating the one-time password via the Web, a database managed by the manager for storing the one-time password issued by the second server, a customer terminal managed by a customer, an end user terminal managed by an end user who is a user of the customer, and a communication network connecting the first server, the second server, the database, the customer terminal, and the end user terminal, wherein the customer terminal sends a one-time password authentication requesting request to the first server when a one-time password authentication processing procedure is started in a service requesting procedure from the end user terminal to the customer terminal, wherein upon receiving the one-time password authentication requesting request, the first server generates a website URL for inputting end user information and returns the website URL to the customer terminal, and wherein the customer terminal redirects the end user terminal to the website URL, wherein the end user terminal uses the website of the URL it has been redirected to so as to input the end user information and sends the end user information to the second server, wherein upon receiving the end user information, the second server issues the one-time password and stores the one-time password in the database, and sends the one-time password to the end user terminal based on the end user information, wherein upon receiving the one-time password, the end user terminal displays the one-time password and displays an input screen for the one-time password and sends, upon input thereof by the end user into the input screen of the end user terminal, the one-time password to the second server, wherein upon receiving the one-time password, the second server refers to the database to authenticate the one-time password and sends an authentication result to the customer terminal, and wherein the customer terminal authenticates the end user terminal based on the authentication result.

Accordingly, since the one-time password system according to the present invention executes a flow of generating the one-time password in the second server managed by the manager, sending it to the customer terminal, and authenticating it upon sending the one-time password from the customer terminal to the second server, it will not be necessary to incorporate a logic other than the main business logic for issuing, managing and verifying the one-time password into the original service logic flow of the customer.

The invention as claimed in Claim 2 is a one-time password system for issuing and authenticating a one-time password, comprising a first server managed by a manager, with an application available via the Web, a second server managed by the manager for issuing and authenticating the one-time password via the Web, a database managed by the manager for storing the one-time password issued by the second server, a customer terminal managed by a customer, an end user terminal and an end user cell phone managed by an end user who is a user of the customer, and a communication network connecting the first server, the second server, the database, the customer terminal, the end user terminal, and the end user cell phone, wherein the customer terminal sends a one-time password authentication requesting request to the first server when a one-time password authentication processing procedure is started in a service requesting procedure from the end user terminal to the customer terminal, wherein upon receiving the one-time password authentication requesting request, the first server generates a website URL for inputting end user information and returns the website URL to the customer terminal, and wherein the customer terminal redirects the end user terminal to the website URL, wherein the end user terminal uses the website of the URL it has been redirected to so as to input the end user information and sends the end user information to the second server, wherein upon receiving the end user information, the second server issues the one-time password, stores the one-time password in the database, sends the one-time password to the end user terminal based on the end user information, and informs the end user cell phone, wherein the end user terminal displays the one-time password on a display screen, wherein the end user cell phone sends the one-time password to the second server when the one-time password displayed on the display screen is key-input by the end user to the end user cell phone in a call state with the second server, wherein upon receiving the one-time password from the end user cell phone, the second server refers to the database to authenticate the one-time password and sends an authentication result to the customer terminal, and wherein the customer terminal authenticates the end user terminal based on the authentication result.

Accordingly, since the present invention performs processes of generating the one-time password in the second server managed by the manager, sending it to the end user terminal, and authenticating it upon sending the one-time password from the end user cell phone connected to the second server to the second server, it will not be necessary to incorporate a logic other than the main business logic for issuing, managing and verifying the one-time password into the original service logic flow of the customer.

The invention as claimed in Claim 3 is a one-time password system for issuing and authenticating a one-time password, comprising a first server managed by a manager, with an application available via the Web, a second server managed by the manager for issuing and authenticating the one-time password via the Web, a database managed by the manager for storing the one-time password issued by the second server, a customer terminal managed by a customer, an end user terminal and an end user cell phone managed by an end user who is a user of the customer, and a communication network connecting the first server, the second server, the database, the customer terminal, the end user terminal, and the end user cell phone, wherein the customer terminal sends a one-time password authentication requesting request to the first server when a one-time password authentication processing procedure is started in a service requesting procedure from the end user terminal to the customer terminal, wherein upon receiving the one-time password authentication requesting request, the first server generates a website URL for inputting end user information and returns the website URL to the customer terminal, and wherein the customer terminal redirects the end user terminal to the website URL, wherein the end user terminal uses the website of the URL it has been redirected to so as to input the end user information and sends the end user information to the second server, wherein upon receiving the end user information, the second server issues the one-time password, stores the one-time password in the database, generates a one-time password voice obtained by synthesizing the one-time password with voice, informs the end user cell phone, and sends the one-time password voice to the end user cell phone, wherein the end user terminal sends the one-time password to the second server when the end user, who has learned the one-time password from the one-time password voice obtained from the end user cell phone, has input the one-time password to a one-time password input screen of the end user terminal, wherein upon receiving the one-time password from the end user cell phone, the second server refers to the database to authenticate the one-time password and sends an authentication result to the customer terminal, and wherein the customer terminal authenticates the end user terminal based on the authentication result.

Accordingly, since the present invention performs processes of generating the one-time password in the second server, sending it to the end user cell phone as a synthesized one-time password voice, and authenticating it upon sending the one-time password from the customer terminal to the second server, it will not be necessary to incorporate a logic other than the main business logic for issuing, managing and verifying the one-time password into the original service logic flow of the customer.

In the invention as claimed in Claim 4, the end user information includes contact information of the end user and a way of contacting the end user.

Accordingly, in the one-time password system of the present invention, it will not be necessary to build in a complicated logic also when it is desired to implement a one-time password of a plurality of types to provide to the end user (SMS (Short Message Service), voice (phone call) or e-mail etc.).

In the invention as claimed in Claim 5, it is possible to set a repetitive condition from the customer terminal regarding the number of times the one-time password is authenticated.

Accordingly, in the one-time password system according to the present invention, the customer can easily adjust the degree of security by simply setting the repetitive condition.

In the invention as claimed in Claim 6, sending of the one-time password from the second server to the end user terminal is performed via e-mail or SMS, and the end user inputs the one-time password obtained via the e-mail or the SMS to the input screen for the one-time password.

Accordingly, in the one-time password system according to the present invention, the end user can obtain and use the one-time password by using an end user terminal enabling use of e-mails or SMSs.

The invention as claimed in Claim 7 comprises a risk level determining means for determining a risk level of the end user by analyzing the end user based on the input end user information.

Accordingly, in the one-time password system according to the present invention, the customer can proceed with later processes upon referring to the risk level of the end user determined by the risk level determining means in addition to the one-time password.

### [Effects of the Invention]

Since the invention as claimed in Claim 1 is a one-time password system for issuing and authenticating a one-time password, comprising a first server managed by a manager, with an application available via the Web, a second server managed by the manager for issuing and authenticating the one-time password via the Web, a database managed by the manager for storing the one-time password issued by the second server, a customer terminal managed by a customer, an end user terminal managed by an end user who is a user of the customer, and a communication network connecting the first server, the second server, the database, the customer terminal, and the end user terminal, wherein the customer terminal sends a one-time password authentication requesting request to the first server when a one-time password authentication processing procedure is started in a service requesting procedure from the end user terminal to the customer terminal, wherein upon receiving the one-time password authentication requesting request, the first server generates a website URL for inputting end user information and sends the website URL to the end user terminal, wherein the end user terminal accesses the website based on the received URL, inputs the end user information using the website, and sends the end user information to the second server, wherein upon receiving the end user information, the second server issues the one-time password and stores the one-time password in the database and returns the one-time password to the end user terminal based on the end user information, and wherein the customer terminal redirects the end user terminal to the website URL, wherein upon receiving the one-time password, the end user terminal displays an input screen for the one-time password and sends the one-time password input to the input screen to the second server, wherein upon receiving the one-time password, the second server refers to the database to authenticate the one-time password and sends an authentication result to the customer terminal, and wherein the customer terminal authenticates the end user terminal based on the authentication result, the one-time password system executes a flow of generating the one-time password in the second server managed by the manager, sending it to the customer terminal, and authenticating it upon sending the one-time password from the customer terminal to the second server so that it will not be necessary to incorporate a logic other than the main business logic for issuing, managing and verifying the one-time password into the original service logic flow of the customer.

Since the invention as claimed in Claim 2 is a one-time password system for issuing and authenticating a one-time password, comprising a first server managed by a manager, with an application available via the Web, a second server managed by the manager for issuing and authenticating the one-time password via the Web, a database managed by the manager for storing the one-time password issued by the second server, a customer terminal managed by a customer, an end user terminal and an end user cell phone managed by an end user who is a user of the customer, and a communication network connecting the first server, the second server, the database, the customer terminal, the end user terminal, and the end user cell phone, and the one-time password system performs processes wherein the customer terminal sends a one-time password authentication requesting request to the first server when a one-time password authentication processing procedure is started in a service requesting procedure from the end user terminal to the customer terminal, wherein upon receiving the one-time password authentication requesting request, the first server generates a website URL for inputting end user information and returns the website URL to the customer terminal, and wherein the customer terminal redirects the end user terminal to the website URL, wherein the end user terminal uses the website of the URL it has been redirected to so as to input the end user information and sends the end user information to the second server, wherein upon receiving the end user information, the second server issues the one-time password, stores the one-time password in the database, sends the one-time password to the end user terminal based on the end user information, and informs the end user cell phone, wherein the end user terminal displays the one-time password on a display screen, wherein the end user cell phone sends the one-time password to the second server when the one-time password displayed on the display screen is key-input by the end user to the end user cell phone in a call state with the second server, wherein upon receiving the one-time password from the end user cell phone, the second server refers to the database to authenticate the one-time password and sends an authentication result to the customer terminal, and wherein the customer terminal authenticates the end user terminal based on the authentication result, it will not be necessary to incorporate a logic other than the main business logic for issuing, managing and verifying the one-time password into the original service logic flow of the customer.

Since the invention as claimed in Claim 3 is a one-time password system for issuing and authenticating a one-time password, comprising a first server managed by a manager, with an application available via the Web, a second server managed by the manager for issuing and authenticating the one-time password via the Web, a database managed by the manager for storing the one-time password issued by the second server, a customer terminal managed by a customer, an end user terminal and an end user cell phone managed by an end user who is a user of the customer, and a communication network connecting the first server, the second server, the database, the customer terminal, the end user terminal, and the end user cell phone, and the one-time password system performs processes wherein the customer terminal sends a one-time password authentication requesting request to the first server when a one-time password authentication processing procedure is started in a service requesting procedure from the end user terminal to the customer terminal, wherein upon receiving the one-time password authentication requesting request, the first server generates a website URL for inputting end user information and returns the website URL to the customer terminal, and wherein the customer terminal redirects the end user terminal to the website URL, wherein the end user terminal uses the website of the URL it has been redirected to so as to input the end user information and sends the end user information to the second server, wherein upon receiving the end user information, the second server issues the one-time password, stores the one-time password in the database, generates a one-time password voice obtained by synthesizing the one-time password with voice, informs the end user cell phone, and sends the one-time password voice to the end user cell phone, wherein the end user terminal sends the one-time password to the second server when the end user, who has learned the one-time password from the one-time password voice obtained from the end user cell phone, has input the one-time password to a one-time password input screen of the end user terminal, wherein upon receiving the one-time password from the end user cell phone, the second server refers to the database to authenticate the one-time password and sends an authentication result to the customer terminal, and wherein the customer terminal authenticates the end user terminal based on the authentication result, it will not be necessary to incorporate a logic other than the main business logic for issuing, managing and verifying the one-time password into the original service logic flow of the customer.

Since the end user information includes contact information of the end user and a way of contacting the end user in the invention as claimed in Claim 4, it will not be necessary to build in a complicated logic also when it is desired to implement a one-time password of a plurality of types (SMS, voice, e-mail etc.) to provide to the end user, the end user is enabled to select among a plurality of types of one-time passwords so as to cope with a variety of demands of the end user.

Since it is possible to set a repetitive condition from the customer terminal regarding the number of times the one-time password is authenticated in the invention as claimed in Claim 5, the customer can easily adjust the degree of security by simply setting the repetitive condition.

Since sending of the one-time password from the second server to the end user terminal is performed via e-mail or SMS, and the end user inputs the one-time password obtained via the e-mail or the SMS to the input screen for the one-time password in the invention as claimed in Claim 6, the end user can obtain and use the one-time password by using an end user terminal enabling use of e-mails and SMSs.

Since the invention as claimed in Claim 7 comprises a risk level determining means for determining a risk level of the end user by analyzing the end user based on the input end user information, the customer can proceed with later processes upon referring to the risk level of the end user determined by the risk level determining means in addition to the one-time password.

In this case, the risk level determining means also presents the risk level of the end user by analyzing past behavior patterns in addition to the end user terminal information (IP address, various browser data, time etc.) and the end user information input by the end user. Therefore, it will be possible to refrain from performing later procedures for an end user of high risk level, irrespective of the authentication result for the one-time password.

### [Brief Description of the Drawings]

[Fig. 1] A block diagram showing one embodiment of the one-time password system according to the present invention.
[Fig. 2] A schematic view of one embodiment of the one-time password system according to the present invention.
[Fig. 3] A sequence diagram showing a flow of processes of one embodiment of the one-time password system according to the present invention (1/2).
[Fig. 4] A sequence diagram showing a flow of processes of one embodiment of the one-time password system according to the present invention (2/2).
[Fig. 5] A sequence diagram showing characteristic portions of a flow of processes of another embodiment of the one-time password system according to the present invention.
[Fig. 6] A sequence diagram showing characteristic portions of a flow of processes of still another embodiment of the one-time password system according to the present invention.

### [Description of the Embodiments]

An embodiment of the present invention will now be explained while referring to the drawings.

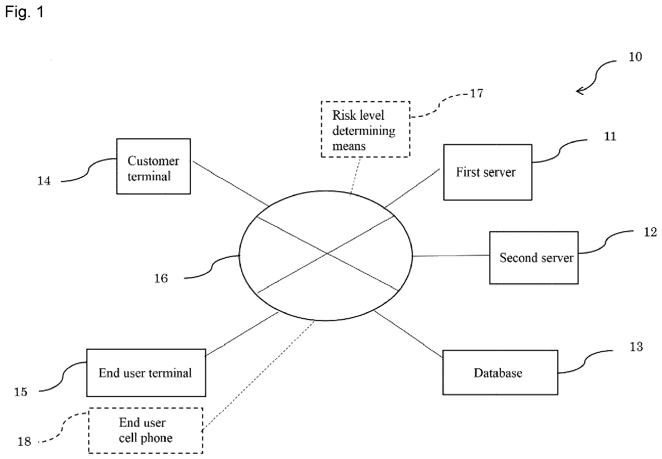

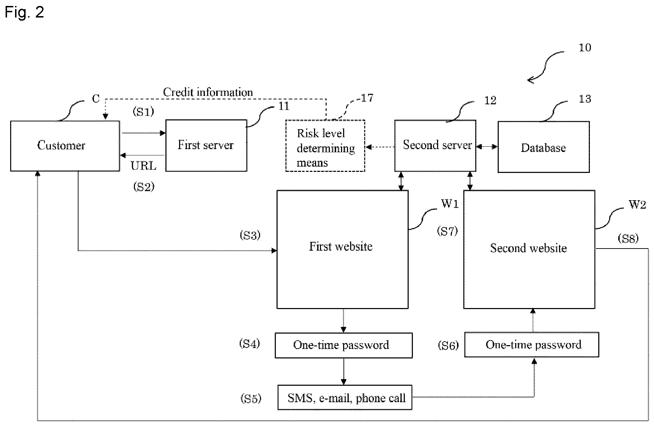

An outline of the one-time password system will first be explained. Fig. 1 is a block diagram showing one embodiment of the one-time password system according to the present invention, and Fig. 2 is a schematic view of one embodiment of the one-time password system according to the present invention.

As shown in Fig. 1, the one-time password system 10 according to the present embodiment is a one-time password system 10 for issuing (generating) and authenticating a one-time password (OTP). The one-time password system 10 is arranged to comprise a first server 11 managed by a manager, with an application available via the Web, a second server 12 managed by the manager for issuing and authenticating the one-time password via the Web, a database 13 managed by the manager for storing the one-time password issued by the second server 12, a customer terminal 14 managed by a customer C, and an end user terminal 15 and an end user cell phone 18 managed by an end user who is a user of the customer C. Note that the end user cell phone 18 is used in Embodiment 3 and Embodiment 4. A risk level determining means 17 shown by broken lines is used in Embodiment 2.

The first server 11, the second server 12, the database 13, the customer terminal 14 as well as the end user terminal 15, the end user cell phone 18 and the risk level determining means 17 are connected by a communication network 16 (Internet communication network, telephone communication network, e-mail communication network, message communication network etc.).

The first server 11 is an API (Application Programming Interface) server. When the first server 11 is accessed in a preliminary determined manner, the first server 11 sends a predetermined website URL to the end user terminal 15 to redirect the end user terminal 15 to the above-mentioned predetermined website. Here, the redirection is a process of automatically guiding and transferring a user visiting the URL page of the first server 11 to another URL.

Next, an outline of the processes of the one-time password system 10 will be explained.

When the customer C starts a transaction with the end user, one-time password processes are performed at a suitable timing. At this time, the one-time password system 10 according to the present embodiment performs the following processes.

That is, at a timing preceding the actual transaction, the customer C requests authentication from the customer terminal 14 to the first server 11 as shown in Fig. 2 (S1). In Fig. 2, the "customer C" includes both the customer C and the end user, wherein the customer C uses the customer terminal 14 while the end user uses the end user terminal 15. Note that the risk level determining means 17 is used in Embodiment 2 to be described later, and the end user cell phone 18 is used in Embodiment 3 and Embodiment 4.

The first server 11 sends a URL (Uniform Resource Locator) for requesting authentication to the customer C for redirection (S2). Accordingly, the end user terminal 15 accesses a first website W1 specified by the URL (S3), and inputs end user information on the first website W1. The end user information includes contact information of the end user subject to authentication (information designating a contact such as cell phone number or e-mail address) and a way of contacting the end user (information designating a medium for authentication such as SMS, e-mail or telephone voice).

Accordingly, in the one-time password system 10 according to the present embodiment, it will not be necessary to build in a complicated logic also when it is desired to implement a one-time password of a plurality of types to provide to the end user (SMS, e-mail, telephone voice etc.).

Further, the customer C can designate a repetitive condition regarding the number of times the one-time password is authenticated. For example, when "1" is input as the repetitive condition, the number of times the one-time password is authenticated is "once". When "2" is input as the repetitive condition, the number of times the one-time password is authenticated is "twice". When "3" is input as the repetitive condition, the number of times the one-time password is authenticated is "three times".

Accordingly, in the one-time password system 10 according to the present embodiment, the customer C can easily adjust the degree of security by simply setting the repetitive condition.

When the end user information is input on the first website W1, the second server 12 issues a one-time password (S4) and stores the one-time password in the database 13 for management. The one-time password is sent or informed to the end user terminal 15 or the end user cell phone 18 via a designated medium (e-mail, SMS, telephone voice) (S5). Note that when informing a one-time password to the end user terminal 15 in a way other than informing the one-time password by e-mail or SMS, it is possible to send the one-time password to a phone number designated by the end user information in form of synthesized voice.

The end user terminal 15 is, for instance, a personal computer or a smartphone, and is a terminal enabling Internet communication. The end user cell phone 18 is, for instance, a fixed-line telephone or a cell phone enabling data transmission or voice communication using DTMF (Dual-Tone Multi-Frequency).

Upon receiving the one-time password by the end user terminal 15 or the end user cell phone 18, the end user inputs the one-time password by accessing a second website W2 the end user has been redirected to from the end user terminal 15 (S6, S7). In Embodiment 2, the one-time password is transmitted to the second server 12 from the end user cell phone 18 connected to the second server 12 using DTMF. The second website W2 might be a website included in the first website W1 or could be a website different from the first website W1. When the URL of the second website W2 is required, the first server 11 or the second server 12 generates the URL of the second website W2.

The second server 12 authenticates the input one-time password while referring to the database 13 and sends an authentication result (for instance, a URL indicating the authentication result) to the customer C (S8).

When performing, for instance, two-factor authentication, a system performing authentication upon sending a one-time password to a customer C via SMS or e-mail is commonly used, but when it is desired to use a one-time password, it is necessary to incorporate a system related to one-time passwords into a system of the customer C. However, such incorporation is troublesome. Therefore, the one-time password system 10 according to the present embodiment uses the first server 11 and the second server 12 and others for performing processes of issuing and authenticating a one-time password for the customer C.

Accordingly, in the one-time password system 10 according to the present embodiment, it will not be necessary to incorporate a logic other than the main business logic for issuing, managing and verifying the one-time password into the original service logic flow of the customer. That is, the customer C can save the trouble of processes related to one-time passwords and focus on its original business.

### [Embodiment 1]

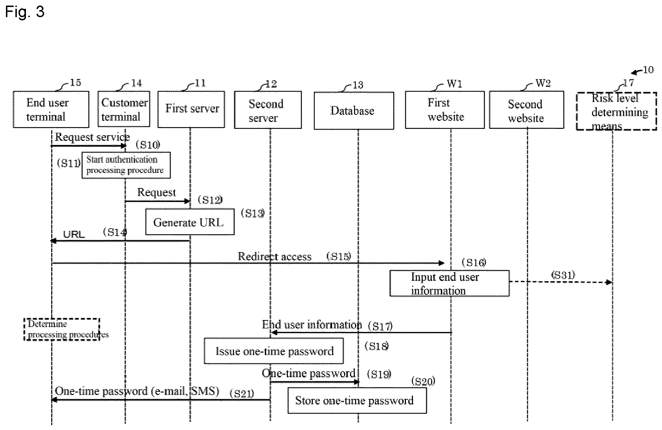

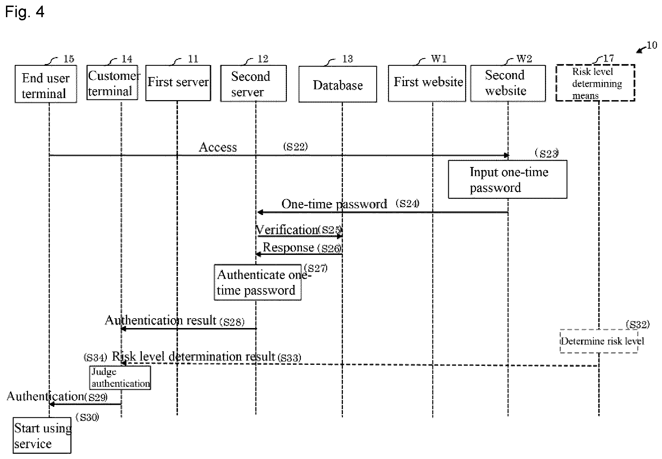

A flow of processes of the one-time password system 10 according to Embodiment 1 will now be explained. Fig. 3 and Fig. 4 are sequence diagrams showing a flow of processes of the one-time password system according to Embodiment 1 of the present invention.

As shown in Fig. 3, the customer terminal 14 sends a one-time password authentication requesting request (S12) to the first server 11 when starting a one-time password authentication processing procedure (S11) in a service requesting procedure (S10) from the end user terminal 15 to the customer terminal 14. The service provided by the system of the customer terminal 14 is, for instance, online shopping and services related to online banking, virtual currencies (crypto-assets), or online games. Note that processes related to the risk level determining means 17 shown by broken lines are used in Embodiment 2 to be described later but not in this embodiment.

Upon receiving the one-time password authentication requesting request (S12), the first server 11 generates a URL of the first website W1 for inputting end user information (S13) and sends the URL of the first website W1 to the end user terminal 15 for redirection from the end user terminal 15 (S14).

The end user terminal 15 accesses the first website W1 based on the received URL (S15), inputs end user information using the first website W1 (S16), and sends the end user information to the second server 12 (S17).

Upon receiving the end user information (S17), the second server 12 issues a one-time password (S18), stores the one-time password in the database 13 (S19, S20), and sends the one-time password to the end user terminal 15 using a medium designated by the end user information to redirect an input screen for the one-time password of the second website W2 to the end user terminal 15 (S21).

As shown in Fig. 4, upon receiving the one-time password (see S21 in Fig. 3), the end user terminal 15 is redirected to the second website W2 (S22), and the input screen for the one-time password is displayed on the end user terminal 15. The end user inputs the obtained one-time password to a corresponding spot on the second website (S23). Accordingly, the input one-time password is input to the second server 12 (S24).

Upon input of the one-time password (S24), the second server 12 verifies it in the database 13 (S25), receives a response from the database 13 (S26), authenticates the one-time password by referring to the database 13 (S27), and sends the authentication result to the customer terminal 14 (S28).

The customer terminal 14 authenticates the end user terminal 15 based on the authentication result (S29).

Upon authentication by the customer terminal 14, the end user terminal 15 can start using the service (S30). Note that when the repetitive condition set by the customer C is set to a value that is "2" or more, the processes (S18) to (S27) are repeatedly performed in accordance with the set value.

As explained so far, with the one-time password system 10 according to the present embodiment, it will not be necessary to incorporate a logic other than the main business logic for issuing, managing and verifying the one-time password into the original service logic flow of the customer so that the customer C can focus on its main business logic and concentrate on its own original system.

Further, with the one-time password system 10 according to the present embodiment, it will not be necessary to build in a complicated logic also when it is desired to implement a one-time password of a plurality of types to provide to the end user (SMS, e-mail) so that the end user is enabled to select among a plurality of types of one-time passwords so as to cope with a variety of demands of the end user.

Moreover, with the one-time password system 10 according to the present embodiment, the customer C can easily adjust the degree of security by simply setting the repetitive condition so as to cope with demands related to the degree of security of the customer.

Note that the customer C was to designate the repetitive condition in the above example, it is also possible to designate the type of one-time password. For instance, the one-time password is designated via e-mail and SMS in a single request or a different setting screen, and unless both are authenticated, the authentication ends in a failure and the failure is passed on to the customer. It is also possible to simultaneously make the repetitive condition effective.

In the above-described embodiment, the contact information of the end user and the way of contacting the end user might either be freely selectable by the end user or fixed and thus not selectable by the end user.

While the above-described embodiment has been explained as an example in which the end user information includes a repetitive condition, it is not necessary to include the repetitive condition in the end user information, and to set the repetitive condition on the system side of the one-time password system 10.

### [Embodiment 2]

Processes of the one-time password system according to Embodiment 2 of the present invention will now be explained. In this embodiment, the one-time password system 10 comprises a risk level determining means 17. The risk level determining means 17 is shown in Fig. 1, Fig. 2 and Fig. 3 by means of broken lines.

In this embodiment, the risk level determining means 17 is connected to the first server 11 and the customer terminal 14 via the communication network 16 as shown in Fig. 1. The risk level determining means 17 analyzes the input end user information to determine the risk level of the end user. In the risk level determining means 17, risk level determination (S32 in Fig. 3) is performed using information obtained from the end user terminal such as IP address, various browser data, or time together with end user information obtained in S31 of Fig. 3.

The risk level determining means 17 performs risk level determination by analyzing past behavior patterns of the end user based on these data. This determination can be performed based on a database collecting information about a plurality of end users. It is also possible to use an artificial intelligence (AI) for the determination and analysis.

The result of risk level determination is sent to the customer terminal 14 after the authentication result has been transmitted from the second server 12 to the customer terminal 14 (S33 in Fig. 4), and the customer judges authentication based on the risk determination (S34 in Fig. 4). That is, when it is determined that the risk is high by the risk determination, the customer can discontinue further processes for the end user even if the one-time password has been authenticated by the second server 12. Accordingly, it is possible to reduce risks originating from business transactions or the like. Note that the result of risk level determination from the risk level determining means 17 to the customer terminal 14 can be sent at any timing after the risk level determination.

### [Embodiment 3]

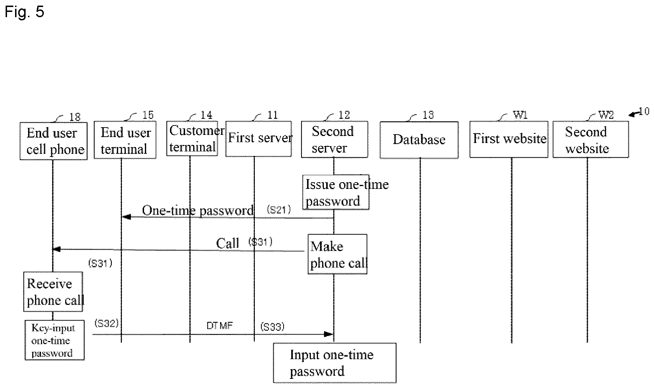

Processes of the one-time password system according to Embodiment 3 of the present invention will now be explained. Fig. 5 is a sequence diagram showing characteristic portions of a flow of processes of another embodiment of the one-time password system according to the present invention. In this embodiment, authentication of the one-time password is performed using key input from the end user cell phone 18 managed by the end user.

In this case, as shown in Fig. 5, in a state the second server 12 has issued a one-time password and sent it to the end user terminal 15 (S21), the second server 12 calls the end user cell phone 18 (S31), and the end user who has answered the phone call inputs the one-time password displayed on the one-time password display screen of the end user terminal using numeric keys (S32). Then, the one-time password is sent from the end user cell phone 18 to the second server 12 in form of DTMF signals (S33). Accordingly, the second server 12 can perform authentication of the one-time password. The remaining processes are identical to those of Embodiment 1.

According to the present embodiment, the second server 12 receives the one-time password using the end user cell phone 18 separate from the end user terminal 15 so that the safety of the one-time password is improved.

### [Embodiment 4]

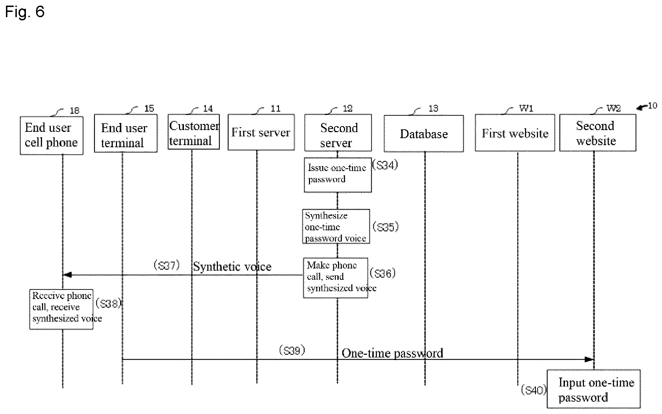

Processes of the one-time password system according to Embodiment 4 of the present invention will now be explained. Fig. 6 is a sequence diagram showing characteristic portions of a flow of processes of the one-time password system according to Embodiment 4 of the present invention. In this embodiment, the one-time password is sent from the second server 12 to the end user cell phone 18 in form of a synthesized voice.

In this case, as shown in Fig. 6, in a state the second server 12 has issued a one-time password (S34), the second server 12 generates synthesized voice data of the one-time password (S35). The second server 12 calls the end user cell phone 18 and informs the synthesized voice (S36, S37). The end user receives the phone call from the second server 12 incoming to the end user cell phone 18 to receive the synthesized voice of the one-time password (S38). It is possible to notify the end user cell phone 18 by the second server 12 using synthesized voice. In this case, the end user inputs the one-time password caught by ear on the end user cell phone 18 from the end user terminal 15 to the one-time password input screen of the second website W2 (S39). Accordingly, the second server 12 performs authentication of the one-time password. The remaining processes are identical to those of Embodiment 1.

According to the present embodiment, the second server 12 sends the one-time password as a voice using the end user cell phone 18 separate from the end user terminal 15 so that the safety of the one-time password is improved.

### [Industrial Applicability]

Since the present invention relates to a one-time password system, it can be widely applied industrially.

### [Reference Signs List]

- 10: One-time password system
- 11: First server
- 12: Second server
- 13: Database
- 14: Customer terminal
- 15: End user terminal
- 16: Communication network
- 17: Risk level determining means
- C: Customer
- W1: First website
- W2: Second website

## Claims

1. A one-time password system for issuing and authenticating a one-time password, comprising
a first server managed by a manager, with an application available via the Web,
a second server managed by the manager for issuing and authenticating the one-time password via the Web,
a database managed by the manager for storing the one-time password issued by the second server,
a customer terminal managed by a customer,
an end user terminal managed by an end user who is a user of the customer, and
a communication network connecting the first server, the second server, the database, the customer terminal, and the end user terminal,
wherein the customer terminal sends a one-time password authentication requesting request to the first server when a one-time password authentication processing procedure is started in a service requesting procedure from the end user terminal to the customer terminal,
wherein upon receiving the one-time password authentication requesting request, the first server generates a website URL for inputting end user information and returns the website URL to the customer terminal, and wherein the customer terminal redirects the end user terminal to the website URL,
wherein the end user terminal uses the website of the URL it has been redirected to so as to input the end user information and sends the end user information to the second server,
wherein upon receiving the end user information, the second server issues the one-time password and stores the one-time password in the database, and sends the one-time password to the end user terminal based on the end user information,
wherein upon receiving the one-time password, the end user terminal displays the one-time password and displays an input screen for the one-time password and sends, upon input thereof by the end user into the input screen of the end user terminal, the one-time password to the second server,
wherein upon receiving the one-time password, the second server refers to the database to authenticate the one-time password and sends an authentication result to the customer terminal, and
wherein the customer terminal authenticates the end user terminal based on the authentication result.

2. A one-time password system for issuing and authenticating a one-time password, comprising
a first server managed by a manager, with an application available via the Web,
a second server managed by the manager for issuing and authenticating the one-time password via the Web,
a database managed by the manager for storing the one-time password issued by the second server,
a customer terminal managed by a customer,
an end user terminal and an end user cell phone managed by an end user who is a user of the customer, and
a communication network connecting the first server, the second server, the database, the customer terminal, the end user terminal, and the end user cell phone,
wherein the customer terminal sends a one-time password authentication requesting request to the first server when a one-time password authentication processing procedure is started in a service requesting procedure from the end user terminal to the customer terminal,
wherein upon receiving the one-time password authentication requesting request, the first server generates a website URL for inputting end user information and returns the website URL to the customer terminal, and wherein the customer terminal redirects the end user terminal to the website URL,
wherein the end user terminal uses the website of the URL it has been redirected to so as to input the end user information and sends the end user information to the second server,
wherein upon receiving the end user information, the second server issues the one-time password, stores the one-time password in the database, sends the one-time password to the end user terminal based on the end user information, and informs the end user cell phone,
wherein the end user terminal displays the one-time password on a display screen,
wherein the end user cell phone sends the one-time password to the second server when the one-time password displayed on the display screen is key-input by the end user to the end user cell phone in a call state with the second server,
wherein upon receiving the one-time password from the end user cell phone, the second server refers to the database to authenticate the one-time password and sends an authentication result to the customer terminal, and
wherein the customer terminal authenticates the end user terminal based on the authentication result.

3. A one-time password system for issuing and authenticating a one-time password, comprising
a first server managed by a manager, with an application available via the Web,
a second server managed by the manager for issuing and authenticating the one-time password via the Web,
a database managed by the manager for storing the one-time password issued by the second server,
a customer terminal managed by a customer,
an end user terminal and an end user cell phone managed by an end user who is a user of the customer, and
a communication network connecting the first server, the second server, the database, the customer terminal, the end user terminal, and the end user cell phone,
wherein the customer terminal sends a one-time password authentication requesting request to the first server when a one-time password authentication processing procedure is started in a service requesting procedure from the end user terminal to the customer terminal,
wherein upon receiving the one-time password authentication requesting request, the first server generates a website URL for inputting end user information and returns the website URL to the customer terminal, and wherein the customer terminal redirects the end user terminal to the website URL,
wherein the end user terminal uses the website of the URL it has been redirected to so as to input the end user information and sends the end user information to the second server,
wherein upon receiving the end user information, the second server issues the one-time password, stores the one-time password in the database, generates a one-time password voice obtained by synthesizing the one-time password with voice, informs the end user cell phone, and sends the one-time password voice to the end user cell phone,
wherein the end user terminal sends the one-time password to the second server when the end user, who has learned the one-time password from the one-time password voice obtained from the end user cell phone, has input the one-time password to a one-time password input screen of the end user terminal,
wherein upon receiving the one-time password from the end user cell phone, the second server refers to the database to authenticate the one-time password and sends an authentication result to the customer terminal, and
wherein the customer terminal authenticates the end user terminal based on the authentication result.

4. The one-time password system as claimed in any one of Claims 1 to 3, wherein the end user information includes contact information of the end user and a way of contacting the end user.

5. The one-time password system as claimed in any one of Claims 1 to 3, wherein it is possible to set a repetitive condition from the customer terminal regarding the number of times the one-time password is authenticated by the second server.

6. The one-time password system as claimed in Claim 1, wherein sending of the one-time password from the second server to the end user terminal is performed via e-mail or SMS, and wherein the end user inputs the one-time password obtained via the e-mail or the SMS to the input screen for the one-time password.

7. The one-time password system as claimed in any one of Claims 1 to 3, comprising a risk level determining means for determining a risk level of the end user by analyzing the input end user information.
